**Europäisches Patentamt**

**European Patent Office**

**Office européen des brevets**

(19)

(11) Veröffentlichungsnummer: **0 255 683**
B1

(12) **EUROPÄISCHE PATENTSCHRIFT**

(45) Veröffentlichungstag der Patentschrift:
**11.10.89**

(21) Anmeldenummer: **87110898.1**

(22) Anmeldetag: **28.07.87**

(51) Int. Cl.⁴: **E04B 1/68, E04B 2/26**

(54) **Schichtverbund-Bauelement.**

(30) Priorität: **07.08.86 DE 8621131 U**

(43) Veröffentlichungstag der Anmeldung:
**10.02.88 Patentblatt 88/6**

(45) Bekanntmachung des Hinweises auf die Patenterteilung:
**11.10.89 Patentblatt 89/41**

(84) Benannte Vertragsstaaten:
**AT BE CH DE GB LI LU NL**

(56) Entgegenhaltungen:
**DE-A- 2 304 886**
**DE-U- 8 528 510**

(73) Patentinhaber: **Thyssen Bausysteme GmbH,
Hagenstrasse 2, D-4220 Dinslaken(DE)**

(72) Erfinder: **Polzin, Rolf R., Dr., Igelweg 26,
D-4030 Ratingen(DE)**

(74) Vertreter: **Patentanwaltsbüro Cohausz & Florack,
Postfach 14 01 20 Schumannstrasse 97,
D-4000 Düsseldorf 1(DE)**

ACTORUM AG

**Beschreibung**

Die Erfindung bezieht sich auf ein Schichtverbund-Bauelement aus zwei Deckblechen und einer dazwischen angeordneten Schicht aus Kunstharzschaum. Zum Verbinden aneinandergrenzender Bauelemente ist an einer Längsseite eine Feder und an der anderen Längsseite eine Nut angeordnet. Weiterhin ist an einer Längsseite ein elastisches Fugendichtungsband angebracht. Derartige Schichtverbund-Bauelemente gemäß dem Oberbegriff des Anspruchs 1 sind aus DE-GM 85 28 510 bekannt. Dabei ist das Fugendichtungsband im Nutgrund unlösbar befestigt, z.B. an die Kunstharzschicht angeschäumt, und legt sich beim Verbinden zweier aneinandergrenzender Bauelemente an die Federseite des Nachbarelementes unter dichtender Verformung an.

Der Erfindung liegt die Aufgabe zugrunde, ein Schichtverbund-Bauelement zu schaffen, an dessen Längsseite das Fugendichtungsband lösbar befestigt ist. Das ermöglicht es, das Schichtverbund-Bauelement jederzeit bei seiner Fertigung, Lagerhaltung und Verarbeitung mit demjenigen Fugendichtungsband zu versehen, das der jeweilige Anwendungsfall erfordert.

Zur Lösung dieser Aufgabe ist vorgesehen, daß das Fugendichtungsband über ein Paar Haftverbindungsbänder, die voneinander lösbar sind, an der mit Feder oder Nut versehenen Längsseite des Bauelementes befestigt ist.

Zweckmäßig besteht das Paar Haftverbindungsbänder aus je einem Haftband, dessen Haftelemente aus einer Vielzahl dicht angeordneter haken förmiger oder pilzförmiger sehr kleiner Vorsprünge besteht, und aus je einem Flauschband, dessen Verbindungselemente aus feinen, dicht bandes und des Flauschbandes dringen die Haftelemente in die Schlingen des Flauschbandes ein und verankern sich dort. Die Haftverbindung kann wiederholt hergestellt und gelöst werden.

Das Haftband oder das lauschband können im Grund der Nut an einer Längsseite des Bauelementes an die Schicht aus Kunstharzschaum angeschäumt sein. Eine andere Ausführungsform sieht vor, daß ein Aluminiumband im Grund der Nut an einer Längsseite des Bauelementes an die Schicht aus Kunstharzschaum angeschäumt ist und das Haftband oder das Flauschband an das Aluminiumband angeklebt ist.

Der andere Teil des Paares Haftverbindungsbänder, nämlich ein zugehöriges Haftband oder ein zugehöriges Flauschband, kann an das aus Schaumstoff bestehende, elastische Fugendichtungsband angeschäumt oder angeklebt sein.

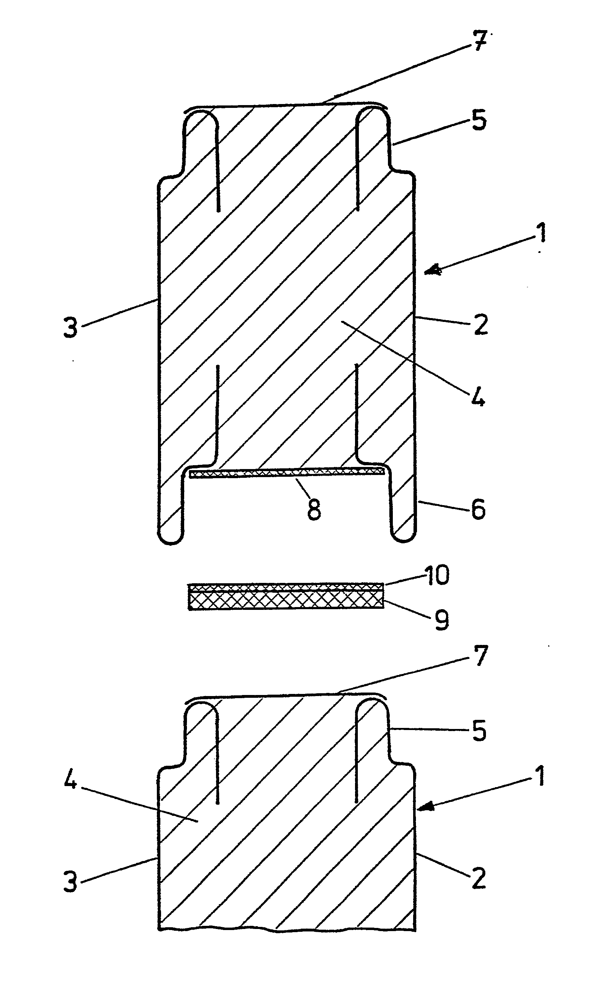

Nachfolgend wird die Erfindung anhand der Zeichnung an einem Ausführungsbeispiel näher erläutert.

Das Schichtverbund-Bauelement 1 wird von zwei Deckblechen 2,3 und einer dazwischen angeordneten Schicht 4 aus Kunstharzschaum gebildet. Zum Verbinden zweier aneinandergrenzender Bauelemente 1 ist an einer Längsseite eine Feder 5 und an der anderen Längsseite eine Nut 6 ausgebildet. Die Schicht 4 aus Kunstharzschaum ist an der Längsseite der Feder 5 durch ein angeschäumtes Aluminiumband 7 und an der Längsseite mit der Nut 6 durch ein angeschäumtes Flauschband 8 abgedeckt. Ein elastisches Fugendichtungsband 9 weist auf einer Seite ein angeschäumtes Haftband 10 auf. Flauschband 8 und Haftband 10 bilden ein Paar zusammengehörige Haftverbindungsbänder, die lösbar miteinander zu verbinden sind. Das Flauschband hat eine Vielzahl dicht angeordneter kleiner Schlingen als Verbindungselemente, die wegen ihrer geringen Größe nicht dargestellt sind. Das Haftband hat als Haftelemente kleine, dicht angeordnete Pilze, die wegen ihrer geringen Größe (z.B. knapp 0,2 mm) ebenfalls nicht dargestellt sind. Beim Schließen des Haftverbundes durch festes Aufeinanderdrücken dringen die pilzförmigen Haftelemente des Haftbandes in die Schlingen des Flauschbandes ein und verankern sich dort.

In der Zeichnung ist das Fugendichtungsband 9 mit Haftband 10 nur der Übersichtlichkeit wegen vom Flauschband 8 abgehoben dargestellt. Spätestens vor dem Zusammenfügen zweier benachbarter Bauelemente 1 wird das Fugendichtungsband 9 am Grund der Nut 6 haftverbunden befestigt.

Die Erfindung eröffnet die Möglichkeit, Schichtverbund-Bauelemente jederzeit mit dem günstigsten Fugendichtungsband zu versehen. Letztere Bänder 9 bestehen beispielsweise aus PVC-Schaum (Polyvinylchlorid), aus PUR-Schaum (Polyuräthan) oder aus Asbestschaum.

**Patentansprüche**

1. Schichtverbundbauelement aus zwei an gegenüberliegenden Längsseiten angeordneten Deckblechen (2, 3) und einer dazwischen angeordneten Schicht (4) aus Kunstharzschaum mit einer an der einen der beiden übrigen Längsseiten angeordneten Feder (5) und einer an der anderen Längsseite angeordneten Nut (6) zum Verbinden aneinandergrenzender Bauelemente, bei dem an einer mit Feder oder Nut versehenen Längsseite ein elastisches Fugendichtungsband (9) angebracht ist, dadurch gekennzeichnet, daß das Fugendichtungsband (9) über ein Paar Haftverbindungsbänder (8,10), die voneinander lösbar sind, an der mit Feder oder Nut versehenen Längsseite des Bauelementes (1) befestigt ist.

2. Bauelement nach Anspruch 1, dadurch gekennzeichnet, daß das Paar Haftverbindungsbänder aus je einem Haftband (10) und einem Flauschband (8) besteht.

3. Bauelement nach Anspruch 2, dadurch gekennzeichnet, daß das Haftband (10) oder das Flauschband (8) im Grund der Nut (6) an einer Längsseite des Bauelementes (1) an die Schicht (4) aus Kunstharzschaum angeschäumt ist.

4. Bauelement nach Anspruch 2, dadurch gekennzeichnet, daß ein Aluminiumband (7) im Grund der Nut (6) an einer Längsseite des Bauelementes (1) an die Schicht (4) aus Kunstharzschaum angeschäumt ist und das Haftband (10) oder das Flauschband (8) an das Aluminiumband (7) angeklebt ist.

5. Bauelement nach einem der Ansprüche 2 bis 4, <u>dadurch gekennzeichnet</u>, daß das Haftband (10) oder das Flauschband (8) an das aus Schaumstoff bestehende, elastische Fugendichtungsband (9) angeschäumt oder angeklebt ist.

## Claims

1. A laminated composite constructional element formed by two cover plates (2, 3) disposed on opposite longitudinal sides and a layer (4) of synthetic resin foam disposed therebetween, the element having a spring (5) disposed on one of the two remaining longitudinal sides and a groove (6) on the other longitudinal side, for the connection of adjoining constructional elements, wherein a resilient joint sealing band is applied to a side provided with a spring or a groove, characterized in that the joint sealing band is attached to the longitudinal side of the constructional element (1) via a pair of adhesive connection bands (8, 10) which can be released from one another.

2. A constructional element according to claim 1, characterized in that the pair of adhesive connection bands comprises an adhesive band (10) and a coating band (8).

3. A constructional element according to claim 2, characterized in that the adhesive band (10) or the coating band (8) is foamed on to the layer of synthetic resin foam in the bottom of the groove (6) on a longitudinal side of the constructional element (1).

4. A constructional element according to claim 2, characterized in that an aluminium band (7) is foamed on to the layer of synthetic resin foam in the bottom of the groove (6) on a longitudinal side of the constructional element (1), and the adhesive band (10) or the coating band (8) is glued on to the aluminium band (7).

5. A constructional element according to claim 2 to 4, characterized in that the adhesive band (10) or the coating band (8) is foamed or glued on to the resilient foamed plastics joint sealing band (9).

## Revendication

1. Elément constructif de liaison interlaminaire de deux tôles de couverture (2, 3) disposées avec leurs côtés longitudinaux se faisant face, et avec une couche (4) de mousse de résine synthétique disposée entre elles, avec une languette (5) disposée à l'un des deux côtés longitudinaux restants et une rainure (6) disposée à l'autre des deux côtés longitudinaux pour la liaison d'éléments constructifs juxtaposés, l'un pourvu de la languette ou de la rainure, dans lequel, à l'un des côtés longitudinaux pourvu de la languette ou de la rainure, est adaptée une bande d'étanchéité (9) du joint, caractérisé en ce que la bande d'étanchéité (9) du joint est fixée, par une paire de bandes de liaison par adhérence (8, 10) qui sont détachables l'une de l'autre, au côté longitudinal pourvu de la languette ou de la rainure, de l'élément constructif (1).

2. Elément constructif suivant la revendication 1, caractérisé en ce que la paire de bandes de liaison par adhérence comprend chaque fois une bande adhérente (10) et une bande pelucheuse (8).

3. Elément constructif suivant la revendication 2, caractérisé en ce que la bande adhérente (10) ou la bande pelucheuse (8) est adhérente par une mousse, au fond de la rainure (6), à l'un des côtés longitudinaux de l'élément constructif (1), à la couche (4) de mousse de résine synthétique.

4. Elément constructif suivant la revendication 2, caractérisé en ce qu'une bande d'aluminium (7) est fixée par mousse au fond de la rainure (6), à l'un des côtés longitudinaux de l'élément constructif (1), à la couche (4) de mousse de résine synthétique et en ce que la bande adhérente (10) ou la bande pelucheuse (8) est collée à la bande d'aluminium (7).

5. Elément constructif suivant l'une des revendications 2 à 4, caractérisé en ce que la bande adhérente (10) ou la bande pelucheuse (8) adhère, par une mousse ou par collage, à la bande (9) élastique d'étanchéité du joint, constituée mousseuse.